# EUROPEAN PATENT SPECIFICATION

(11) **EP 3 741 991 B1**
(45) Date of publication and mention of the grant of the patent: **19.01.2022**
(21) Application number: 19176111.3
(22) Date of filing: 23.05.2019
(51) Int. Cl.: F03D 7/04, F03D 7/02

(54) **METHOD FOR DYNAMIC REAL-TIME OPTIMIZATION OF THE PERFORMANCE OF A WIND PARK AND WIND PARK**
VERFAHREN ZUR DYNAMISCHEN ECHTZEITOPTIMIERUNG DER LEISTUNG EINES WINDPARKS UND WINDPARK
PROCÉDÉ POUR L'OPTIMISATION DYNAMIQUE EN TEMPS RÉEL DE LA PERFORMANCE D'UN PARC ÉOLIEN ET PARC ÉOLIEN

(43) Date of publication of application: 25.11.2020
(73) Proprietor: E.ON Digital Technology GmbH, 30457 Hannover (DE)
(72) Inventor: Elgezua Fernández, Inko, 30457 Hannover (DE); Cortiana, Giorgio, 30457 Hannover (DE); Bernabè Moreno, Juan Antonio, 30457 Hannover (DE)
(74) Representative: RGTH

(56) References cited:
- EP-A2- 2 405 133
- US-A1- 2013 300 115
- US-A1- 2016 084 224

## Description

The present invention relates to a method for dynamic real-time optimization of the performance, in particular of the power output, of a wind park. Furthermore, the present invention relates to a wind park configured for conducting a method for dynamic real-time optimization of its performance.

### Technological background

The performance, in particular the power output or yield, of a wind park can be strongly reduced by wake effects between the wind turbines of the wind park. Other sources for a suboptimal performance of wind parks are control or sensor errors. In prior art, wake effects are mitigated by a wind park layout optimized along the prevailing wind directions. Still, especially along less frequent wind directions, residual wake effects can result in production or performance losses up to several percentage points. Such residual wake losses can be mitigated by coordinating the operational settings of the wind turbines in the wink park. This can be achieved, for example, by reducing the wake created by upstream wind turbines via blade pitch angle control or by redirecting the wind turbines via yaw angle control.

Prior art document WO 2017/107919 A1 discloses a method and system for operating a wind turbine farm, said wind turbine farm comprising a plurality of wind turbines having at least one ambient sensor. The wind turbines are in communication with a remote control unit, which in turn is connected to at least one database in which ambient data and operating data are stored. The remote control units selects an upwind wind turbine and determines a first power output thereof, and further selects a downwind wind turbine and determines a second power output thereof. The remote control unit determines a relationship between the first and second power outputs which is then used to determine a reduced operating level of the selected upwind wind turbine.

Prior art document EP 3 290 690 A1 discloses a wind farm and a control method for a wind farm. The wind farm includes a control device that, with the use of wind condition information of the wind farm and disposition information of upstream wind turbines and of downstream wind turbines, outputs a yaw angle designation value to the upstream wind turbines or the downstream wind turbines so that the generated electric energy of the wind farm is increased.

Prior art document EP 3 336 349 A1 discloses a method and a system for configuring wind turbines. The method includes the generation of a plurality of configuration profiles. One of the configuration profiles is set as the active configuration profile and the rest of the configuration profiles are stored as shadow configuration profiles. The performance of the active configuration profile and the shadow configuration profiles are monitored. Based on the performance of the configuration profiles, a candidate configuration profile is chosen. Further, a delta configuration profile is generated by eliminating the duplicate parameters from the candidate configuration profile and the active configuration profile and the active configuration profile is updated with the delta configuration profile.

Prior art document US 2016/0215759 A1 discloses a method and system for wind plant power optimization. The system includes at least one processor and at least one module operable by the at least one processor to receive at least one sensor measurement. The at least one sensor measurement may include at least one of a wind speed measurement, or a wind direction measurement. The at least one module may be further operable to determine, using a stochastic filter, and based on the at least one sensor measurement, at least one predicted attribute of wake generated by a wind turbine. The at least one module is operable to modify, based on the at least one predicted attribute of the wake, at least one wind turbine control variable for at least one wind turbine and output the at least one wind turbine control variable.

Prior art document DE 10 2012 011 210 A1 discloses a target value dependent control method of a wind park. For a predetermined time period weather data is predicted and an energy yield of at least one wind turbine is calculated for the determined time period. The energy yield is calculated for at least two sets of operational parameters of the wind turbine. For optimization of the grid performance the wind turbine is operated with operational parameters for which the calculated energy yield has the smallest difference from a target value of the energy yield.

EP 2 405 133 A2 discloses a wind turbine including a generator and a control system. The control system is configured to determine whether a predefined amount of turbulence will be induced to the wind turbine by a wake zone created by a wind turbine upstream thereof. The control system is also configured to adjust at least one constraint of the wind turbine to a first setting if the amount of turbulence is greater than the predefined amount, the constraint affecting power produced by the generator, and to adjust the constraint of the wind turbine to a second setting if the amount of turbulence is not greater than the predefined amount.

The performance or wake management strategies known in prior art are typically static and do not adapt to the wind park operating conditions, such as the number of wind turbines in operation or under curtailment. Furthermore, the known methods require intensive simulations of the wake effects or extensive numerical optimization to find an optimal configuration. Wake models or other models used in the simulations are generally inaccurate. Optimization methods performed at wind park level also require very large computation times. In addition, the known methods cannot compensate for miscalibrations due to unknown systematic effects, such as sensor errors or errors in the computation models.

### Description of the invention: problem, solution, advantages

It is an object of the present invention to provide a method for a dynamic real-time optimization of the performance, in particular of the power output, of a wind park, which is data driven, fast and independent of physics models, technical models or simulations, and also allows to compensate for miscalibrations and systematic errors. Furthermore, it is an object of the present invention to provide a wind park, which is configured for conducting such a method.

The present invention proposes a method for dynamic real-time optimization of the performance, in particular of the power output, of a wind park, wherein the wind park comprises a plurality of wind turbines, the method comprising the steps of:
a) providing, for a plurality of subsets of the wind turbines of the wind park, a mapping of a data vector to a target parameter, said target parameter being indicative of the performance of the subsets of the wind turbines, said data vector comprising wind condition data and operational parameters for the wind turbines of the subsets of wind turbines,
b) selecting a subset of the plurality of subsets of wind turbines for optimization,
c) determining the wind condition data for the selected subset of wind turbines,
d) determining the operational parameters for the wind turbines of the selected subset by at least one of
   - selecting operational parameters which maximize or minimize the value of the target parameter for the determined wind condition data, and/or
   - selecting operational parameters for which the value of the target parameter for the determined wind condition data is unknown,
   the method further comprising the steps of
e) applying the determined operational parameters to at least one of the wind turbines of the selected subset,
f) after a first time interval, measuring posterior wind conditions and determining a posterior value of the target parameter for the selected subset,
g) updating the mapping with the posterior wind conditions and the posterior value of the target parameter of step f) for the applied determined operational parameters, and
h) repeating, after a second time interval, steps b) to h),
wherein the determined operational parameters for the wind turbines of the selected subset and the values of the target parameter are determined by a data-driven method and not determined based on physical models or technical models or weather models or external forecasts or simulations.

The method for dynamic real-time optimization of the performance is applied to a wind park, wherein the wind park comprises a plurality of wind turbines. In particular, the wind park may comprise at least two, preferably at least ten, further preferably at least 50, still further preferably at least 100, wind turbines.

In step a) of the method a mapping of a data vector to a target parameter is provided for a plurality of subsets of the wind turbines of the wind park. Each subset of the wind turbine comprises at least one, preferably at least two or more wind turbines of the wind park. The subsets can be disjunct, however it is preferred that the subsets are overlapping, such that any wind turbine can be a member of more than one of the subsets of wind turbines.

The mapping provides a relationship between a data vector and a target parameter, wherein the data vector comprises at least wind condition data and operational parameters for the wind turbines of the subsets of the wind turbines and wherein the target parameter is indicative of the performance of the subsets of the wind turbines.

The mapping can be configured as a collection or as a plurality of sub-mappings, wherein each of the sub-mappings relates to a single subset of wind turbines or to multiple subsets of the plurality of subsets of wind turbines.

However, the mapping may also be configured as a single mapping encompassing the relationship between the data vector and the target parameter for most or all of the plurality of disjunct or overlapping subsets of wind turbines. In this case the single mapping may be structured such that it can be reduced to a mapping for any particular subset of wind turbines included in the mapping, wherein the particular subset may be chosen for optimization of the performance of the wind turbines in step b). This reduction may be achieved by keeping the data vector, in particular the wind condition data, the operational parameters and/or the target parameter constant for those subsets of wind turbines, which are not chosen for optimization in step b).

In step b) a subset of the plurality of subsets of wind turbines is chosen for optimization and in step c) wind condition data for the selected subset of wind turbines is determined. Steps b) and c) can be interchanged. The wind condition data may comprise a wind direction and a wind speed for the wind turbines in the selected subset.

In step d) the operational parameters for the wind turbines of the selected subset are determined.

The operational parameters may be determined by selecting operational parameters which maximize or minimize the value of the target parameter for the determined wind condition data, depending on whether the optimization problem is a maximization problem or a minimization problem.

If the mapping comprises of a collection of sub-mappings, the sub-mapping corresponding to the selected subset is used for maximization or minimization of the value of the target parameter. If the mapping is configured as single mapping which includes at least the relationship between the data vector and the target parameter for the wind turbines in the selected subset, the single mapping may be reduced to a mapping for the selected subset of wind turbines. However, it is also possible that the maximization or minimization of the value of the target parameter is done without reducing the single mapping to the selected subset.

For maximizing or minimizing the value of the target parameter the operational parameters for the wind turbines in the selected subset may be scanned or varied for the determined wind conditions data until a set of operational parameters is found, which maximizes or minimizes the value of the target parameter. The operational parameters may be determined by using any applicable mathematical optimization or variation technique.

Alternatively, in step d) the operational parameters can be determined for the wind turbines of the selected subset by selecting operational parameters for which the value of the target parameter for the determined wind condition data is unknown.

Thus, operational parameters for the wind turbines can be selected for which it is unclear, what the value of the target parameter will be given the determined wind conditions. By selecting such operational parameters additional data is gathered to improve the optimization method.

After the operational parameters for the wind turbines of the selected subset are determined, the operational parameters are applied in step e) to at least one of the wind turbines of the selected subset.

In step f), after a first time interval, posterior wind conditions are measured and a posterior value of the target parameter for the selected subset is determined.

The first time interval may be expediently chosen such that the determined operational parameters applied to the wind turbines have taken effect, i.e. that the wind turbines have finished their adjustment to the operational parameters.

Furthermore, the first time interval is preferably chosen such that turbulences induced by the adjustment of the wind turbines in the airflow between the wind turbines have settled or stabilized or that wake effects from upstream wind turbines of the selected subset have propagated through the wind turbines of the selected subset to downstream wind turbines. Thus, the posterior wind conditions and the posterior value of the target parameter for the selected subset are preferably measured or determined when the wind conditions are comparatively stable after the wind turbines have adjusted their operation to the determined operational parameters.

In step g) the mapping is updated with the posterior wind conditions and the posterior value of the target parameter of step f) for the applied determined operational parameters.

Accordingly, after the wind turbines in the selected subset have been adjusted to the determined operational parameters and after the wind conditions in the selected subset have stabilized the measured posterior wind conditions and the applied determined operational parameters are combined to a data vector and the value of the target parameter for this data vector in the mapping may be updated with the determined posterior value of the target parameter.

By updating the mapping the method provides a data-driven and self-learning optimization of the performance of a wind park, without the need to rely on simulations or calculations from physics models, technical models, weather models. Furthermore, by updating the mapping with the posterior wind conditions and the posterior value of the target parameter for the applied determined operational parameters, miscalibrations of turbine nacelle orientation sensors, yaw direction sensors, blade pitch sensors, wind condition sensors and other errors related to wind turbine construction or operation can be compensated. Advantageously, systematic offsets of the readings from the various turbine sensors can be compensated.

In step h) the method steps b) to h) are repeated. Preferably, a different subset of wind turbines is then selected in the next iteration of steps b) to h).

Preferably, the selected subset includes at least two, further preferably at least three, still further preferably at least five, wind turbines.

Further preferably, the subset is selected based on wind park layout, and/or measured wind condition data, and/or a lookup table, and/or a data base, and/or a predetermined selection condition.

For example, for selecting the subset, wind conditions are measured and based on the wind park layout and by employing an algorithm a subset of wind turbines, which is most subject to power losses due to wake effects or the like, is selected for optimization. By selecting the subsets depending on measured wind condition data and/or wind park layout, the selection of the subset is adaptable in real-time to changing environmental conditions.

It is also possible that for a given wind park layout a fixed rule for selecting the subset of wind turbines of the wind park is used.

It is furthermore preferred that in step e) the determined operational parameters are applied to at least one upstream wind turbine and/or to at least one downstream wind turbine of the selected subset of wind turbines.

In a particular preferred embodiment, the determined operational parameters are applied to at least one upstream turbine. The determined operational parameters may represent a curtailment of the wind turbine, i.e. a setting, which limits the power output of the wind turbine below its potential maximum power output. Thus, the operational parameters may be chosen such that they limit the maximum power output of the upstream wind turbine in order to limit the wake effects on the downstream wind turbine and, therefore, to increase the total power output of the wind turbines in the selected subset.

Furthermore preferably, the determined wind condition data is determined by a data-driven method, and in particular not determined based on physics models or technical models or weather models or external forecast or simulations.

Particularly, the method for optimization of the performance of a wind park does not rely on technical models or simulations of the wind park or of the wind turbines and, in addition, the method does not rely on physics models or weather models for determining the wind conditions. Preferably, the wind conditions are determined directly using sensors. Still further, the present invention does not use external weather forecasts or the like. Thus, the method is entirely data-driven and the required computation power is drastically reduced.

Furthermore preferably, the mapping is implemented as an objective function.

The objective function takes the data vector, i.e. at least the wind condition data and the operational parameters as input values and the value of the target parameter is the output of the objective function. For determining the operational settings for the selected subset of wind turbines, the determined wind conditions are kept constant and the parameter space of possible operational parameters is searched for a set of operational parameters which optimize, in particular maximize or minimize, the value of the target parameter.

This optimization can be done using any known mathematical optimization techniques. For example, Monte Carlo methods, Gradient methods or heuristic algorithms such as simulated annealing or the like may be used. Of course, any other mathematical optimization techniques may be used to maximize or minimize the value of the target parameter in the objective function.

Further preferably the objective function is a continuous function of the data vector, wherein still further preferably the values of the target parameter are interpolated between discrete data vector points. Therefore, the continuous objective function is preferably a continuous function of the data vector, i.e. at least of the wind conditions and of the operational parameters. Since the method is preferably a data-driven method on a large parameter space, wherein target parameter values may be sparse, the value of the target parameter may be interpolated between known values of the target parameter to provide a continues objective function.

In a preferred embodiment, in step d) the value of the target parameter is maximized or minimized by means of a machine learning algorithm and/or a decision tree and/or a neural network.

Preferably, the decision tree and/or the neural network are a machine learning algorithm.

By maximizing or minimizing the value of the target parameter by means of a machine learning algorithm and/or a decision tree and/or a neural network the search space of possible operational parameters can be reduced and only those operational parameters are focused on, which are promising to achieve a maximal or minimal value of the target parameter.

Because of the size of the parameter space, i.e. the space of all possible operational parameters for all turbines of the wind park for all possible wind conditions, prior art methods relied on physics models or simulations. However, developing such models and simulations generally requires a deep knowledge of the underlying physics at play. The results are commonly narrow models that capture well a particular effect but fail to generalize to other events.

By employing a machine learning algorithm and/or a decision tree and/or a neural network or a combination thereof in the present data-driven method the computational overhead is drastically reduced and physics models or simulations are not required.

Since physics models are simplification of physical events, they usually suffer from deviations from real observations. In prior art methods these deviations result in suboptimal strategies for wake management, i.e. known methods fail to optimize the wind park performance to its maximum potential.

By using the present data-driven method optimal operational parameters are found without any assumption on the underlying physics models. In addition, errors, such as discrepancies between nominal and actual C_{P}/C_{T} curves, differences in model parameters, deficiencies in wake models, sensor offsets and miscalibrations, which have negative effects in known optimization methods are compensated in the present method.

In prior art, to calculate operational parameters numerical computations using complex models have to be performed. These computations have extensive hardware requirements and in general cannot be done in real-time. This means that in prior art operational parameters have to be calculated in advance and are retrieved from a lookup table or a database later on. With the present method, the best operational parameters are not calculated in advance, but are determined in real-time.

It is furthermore preferred that in step g) the mapping is updated by inputting at least one of the measured posterior wind conditions and/or the determined operational parameters and/or the measured posterior value of the target parameter into a machine learning algorithm and/or a decision tree and/or a neural network, in particular into the machine learning algorithm and/or the decision tree and/or the neural network used for maximizing or minimizing the value of the target parameter.

By using a machine learning algorithm, and/or decision tree, and/or neural network to update the mapping the effectiveness of the method is improved. In particular, by inputting the measured posterior wind conditions and/or the determined operational parameters and/or the measured posterior value of the target parameter into a machine learning algorithm and/or a decision tree and/or a neural network, the machine learning algorithm and/or the decision tree and/or the neural network is fitted to the new data, for example the weights of the neural network are updated, which results in better and faster optimization results in later iterations of the method.

It may furthermore be preferred that the method comprises the step of providing a relationship, preferably based on historical data, between prior wind conditions and posterior wind conditions, said posterior wind conditions expected after the predetermined first time interval, the relationship preferably being a statistical probability of the posterior wind condition expected after the predetermined first time interval for the prior wind conditions, wherein furthermore preferably the wind condition data in step c) are determined by measuring prior wind conditions and selecting the expected posterior wind conditions based on the relationship.

The relationship may be provided as a lookup table or a database.

In step c) the wind condition data may be determined by first measuring prior wind conditions. From the relationship between prior wind conditions and expected posterior wind conditions those posterior wind conditions are selected which have the highest probability given the measured prior wind conditions. These expected posterior wind conditions are than used for the determined wind conditions in step c).

Since the first time interval is preferably chosen such that turbulences induced by the adjustment of the wind turbines in the airflow between the wind turbines have settled or stabilized or that wake effects from upstream wind turbines of the selected subset have propagated through the wind turbines of the selected subset, the expected posterior wind conditions, which are used as the determined wind condition data in step c) provide a forecast of the wind conditions for after the determined operational parameters have been applied to the wind turbines.

As wind conditions are not controllable and the objective is to maximize the performance, in particular the power output, of the wind turbines in the selected subset, the best operational parameters have to be chosen not according to the measured prior wind conditions, but according to the expected posterior wind conditions. By using the relationship, the optimization method is improved.

Furthermore, the expected posterior wind conditions can be determined by forecasting models, Markov processes, lookup tables or time series forecasting.

Preferably, after step g) the relationship of prior wind conditions and posterior wind conditions is updated with the measured prior wind conditions of step c) and the measured posterior wind conditions of step f).

By updating the relationship, the forecast of the expected posterior wind conditions after the first predetermined time interval is improved. Furthermore, by updating the relationship any sensor errors or offsets in the measured wind conditions are compensated, so that even is such errors or offsets are present, the method will determine operational settings which optimize the performance of the wind park.

Furthermore preferably in step a) the value of the target parameter is set to a default maximal or minimal value for data vectors for which the value of the target parameter is unknown.

By setting a default value for the value of the target parameter for data vectors for which the value of the target parameter is unknown, in particular before the first iteration of steps b) to h), a default mapping is provided. With this default mapping, step d) of determining the operational parameters for the wind turbines of the selected subset can be limited to the step of selecting operational parameters which maximize or minimize the value of the target parameter for the determined wind condition data.

In case the value of the target parameter for the determined wind condition data and the operational parameters is unknown, the value of the target parameter has been set by default to a value that is maximal or minimal and, therefore, the corresponding operational parameters will be selected. After step g) the mapping is updated with the actual measured posterior wind conditions and the posterior value of the target parameter of step f) and, therefore, the default value of the target parameter is corrected with the actual posterior value of the target parameter for further iterations of the method.

Preferably if in step d) multiple operational parameters maximize or minimize the value of the target parameter for the determined wind condition data and/or if in step d) the value of the target parameter is unknown from multiple operational parameters, the operational parameters are determined by selecting operational parameters randomly from the multiple operational parameters or by interpolating the operational parameters between operational parameters with known values of the target parameter.

In particular when default values are set for the values of the target parameter for data vectors for which the value of the target parameter is unknown, it can happen that in the first iterations of the method multiple operational parameter sets are mapped to the default maximal or minimal value of the target parameter. In this case, choosing operational parameters randomly from those operational parameters mapped to the default maximal or minimal value of the target parameter allows to iteratively gather new information and to update the mapping.

Preferably, the target parameter is a power output of at least one of the wind turbines in the selected subset, and/or a combined power output of the wind turbines in the selected subset, and/or a limit on a mechanical load of at least one of the wind turbines of the selected subsets, and/or power grid related curtailments and/or any combination thereof.

For example, it may be expedient that the object of the optimization is not only to determine operational parameters which maximize the power output of the subset of wind turbines, but that in addition the mechanical loads on the downstream wind turbine should be limited. For example, the power increase of the downstream wind turbine due to a curtailment of an upstream wind turbine might be limited to a maximum of five percent over its usual power output.

In addition, a further boundary condition may be provided by power grid related curtailments or other parameters that have to be observed.

Furthermore preferably, the data vector, in particular the wind condition data, comprises the wind speed and/or the wind direction, and/or the turbulence intensity, and/or the temperature, and/or the relative humidity, and/or the meteorological season, and/or the data vector comprises a Reynolds number and/or a turbine status and/or a wind park status and/or turbine downtimes and/or power grid related curtailments and/or the time of the day.

Thus, any of these parameters can be incorporated in the data vector to provide an improved optimization of the performance of the wind turbines in the selected subset. Since these and other parameters can be chosen as input to the data vector and the mapping, in particular the objective function, the search space of operational parameters can become very large. Therefore, it is particular preferred, that the operational parameters are determined by using a neural network and/or a decision tree to maximize or minimize the value of the target parameter.

Still further preferably, the data vector, in particular the operational parameters, may comprise a nacelle yaw angle and/or a blade pitch angle of at least one of the wind turbines in the selected subset.

In a preferred embodiment, the first time interval of step f) is equal or greater than the wake propagation time for wake effects to propagate between the wind turbines of the selected subset.

By choosing the first time interval equal or greater than the wake propagation time the posterior wind conditions and the posterior value of the target parameter of the selected subset are measured in step f) after the wake effects, for example induced from the adjustment of the wind turbines to the operational parameters, have propagated through the selected subset of wind turbines. Thus, when in step f) the posterior wind conditions and the posterior value of the target parameter are measured or determined, these values are measured or determined for wind conditions which are unaffected by short time turbulences or wake effects.

In addition, if a relationship between prior wind conditions and expected posterior wind conditions is provided, updating this relationship is not affected by short time wake effects propagating through the wind park.

Still further, the wake propagation time is preferably calculated based on an estimation of the wind park layout and/or the wind direction and/or the wind speed and/or on a sensor-based measurement and/or using an algorithm using the power output of the wind turbines in the selected subset.

For example, by monitoring the power output of the wind turbines in the selected subset it can be determined that a wake has propagated through the entire subset of wind turbines. By identifying the wake effect in the power output the wake propagation time can be determined.

Preferably the second time interval of step h) is at least larger than either the wake propagation time or the time which is necessary to evaluate or determine all necessary information to make an evaluation of the wind conditions and of the power output of the turbines in the subsets.

Still further preferably the data of the data vector and/or the measured prior wind conditions, and/or the measured posterior wind conditions, and/or the measured posterior value of the target parameter, and/or the operational parameter are preprocessed, wherein the preprocessing preferably comprises input validation and/or de-noising and/or a unit conversion and/or a correction for missing values.

Another solution to the object of the present invention is the provision of a wind park configured for conducting a method as described above, wherein the wind park comprises a plurality of wind turbines and a Supervisory Control And Data Acquisition system (SCADA) for a real-time measurement and/or determination of prior wind conditions and/or posterior wind conditions and/or posterior values of the target parameter and/or of operational parameters.

In addition, the SCADA may comprise sensors for the real-time measurement and/or determination of the prior wind conditions and/or the posterior wind conditions and/or the posterior values of a target parameter and/or the operational parameters.

The sensors may be installed on the individual wind turbines but it is also possible that the sensors are distributed throughout the wind park or the subsets of wind turbines.

Preferably the sensors are installed on the wind turbines.

Still further preferably the wind park comprises a controller to transmit operational parameters to the wind turbines.

Still further preferably the wind park comprises a computing unit for receiving data from the SCADA and for determining, in particular calculating, the operational parameters.

A further solution to the object of the invention is the provision of a computer program product comprising instructions which, when the program is executed by a computer operable to receive at least measured wind condition data and determined posterior values of a target parameter, cause the computer to carry out the steps of the method described above, in particular at least steps d) and g).

A still further solution to the object of the invention is the provision of a computer-readable data carrier having stored thereon the computer program product described above.

### Short description of the figures

The present invention is explained in more detail with reference to the accompanying figures.
- Fig. 1a: shows a top view of a wind park with the wind coming from the north,
- Fig. 1b: shows a top view of a wind park with the wind coming from the west,
- Fig. 2: shows a schematic setup of a wind park,
- Fig. 3: shows a flow chart for a method for dynamic real-time optimization of the performance of a wind park,
- Fig. 4a: shows a subset of wind turbines comprising two wind turbines,
- Fig. 4b: shows a mapping of a data vector to a target parameter before optimization of the performance of a wind park,
- Fig. 4c: shows a mapping of a data vector to a target parameter after a first iteration of a method for optimization of the performance of a wind park,
- Fig. 4d: shows a mapping of a data vector to a target parameter after multiple iterations of a method for optimization of the performance of a wind park,
- Fig. 5a: shows an objective function of a target parameter before optimization of the performance of a wind park,
- Fig. 5b: shows a relationship between prior wind directions and expected posterior wind directions before optimization of the performance of a wind park,
- Fig. 5c: shows an objective function of a target parameter after multiple iterations of a method for optimization of the performance of a wind park,
- Fig. 5d: shows a relationship between prior wind directions and expected posterior wind directions after multiple iterations of a method for optimization of the performance of a wind park, and
- Fig. 6: shows a subset of wind turbines comprising three wind turbines.

### Detailed description of the figures

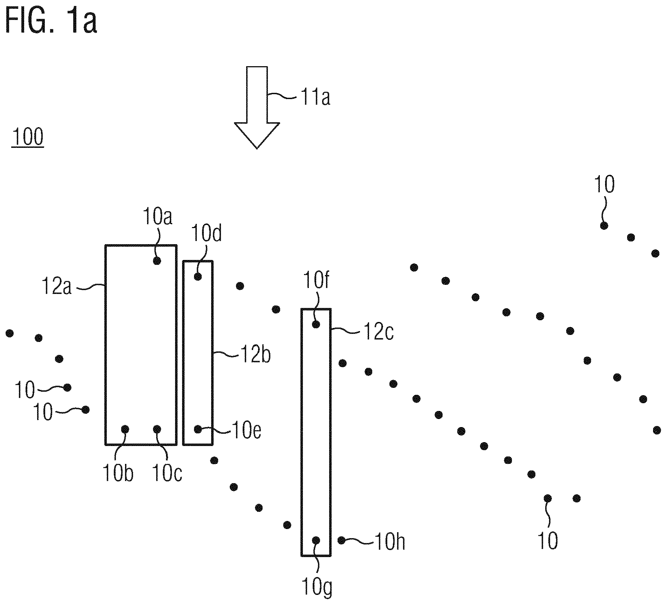

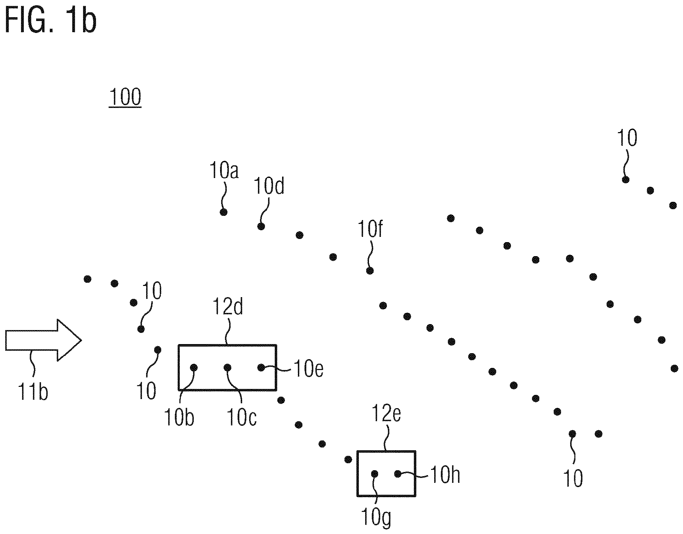

Figs. 1a und 1b show a top view of a wind park 100. The wind park 100 comprises a plurality of wind turbines 10, 10a to 10g, the wind turbines 10, 10a to 10g being indicated with dots. In the situation shown in Fig. 1a the prevailing wind direction 11a is from the north, while in contrast, for the same wind park 100 in Fig. 1b the prevailing wind direction 11b is from the west.

Depending on the wind direction 11a, 11b different wind turbines 10, 10a to 10g shield each other from the incoming wind or influence each other by wake effects propagating through the wind park 100. For example, in Fig. 1a, with the wind direction 11a being the north direction, wind turbine 10a is upstream of and shields wind turbines 10b, 10c positioned south of wind turbine 10a. Wind turbines 10, 10a to 10g may be grouped in subsets 12a, 12b, 12c, wherein the subsets 12a, 12b, 12c are defined such that wind turbines 10, 10a to 10g included in each of these subsets 12a, 12b, 12c affect each other because of the wind park layout and the prevailing wind direction 11a. For example, the first subset 12a in this case comprises three wind turbines 10a, 10b, 10c, while the second subset 12b comprises two wind turbines 10d, 10e and the third subset 12c comprises two wind turbines 10f, 10g.

In the situation shown in Fig. 1b, where the prevailing wind direction 11b is from the west, the wind turbines 10, 10a to 10g shielding each other are grouped in subsets 12d, 12e different from the subsets 12a, 12b, 12c of Fig. 1a. Subset 12d in this case comprises three wind turbines 10b, 10c, 10e while subset 12e comprises two wind turbines 10g, 10h.

A comparison of Figs. 1a and 1b shows that individual wind turbines 10, 10a to 10g may be included in different subsets 12a to 12e depending on the prevailing wind direction 11a, 11b. For example, wind turbine 10b of subset 12a in Fig. 1a is a downstream wind turbine when the wind direction 11a is from the north. When the wind direction 11b is west, the same wind turbine 10b may be included in subset 12s as an upstream wind turbine.

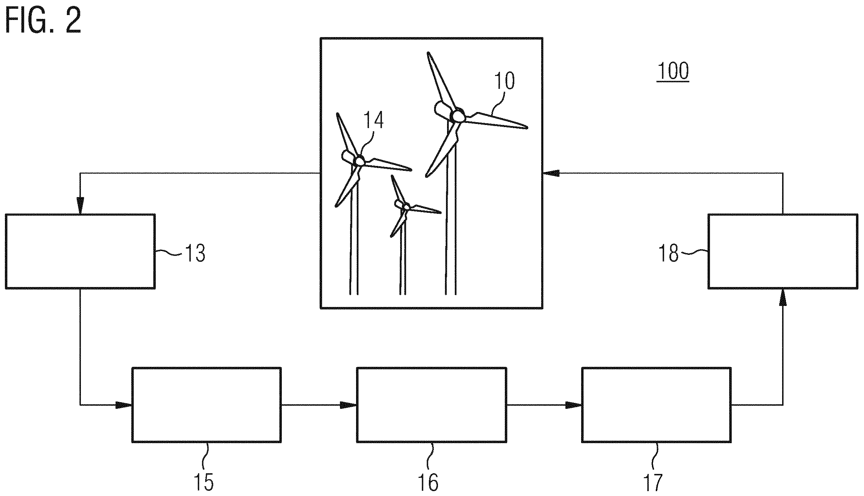

Fig. 2 shows a schematic setup of the wind park 100 of Figs. 1a and 1b. The wind park 100 comprises a plurality of wind turbines 10 and a Supervisory Control And Data Acquisition system 13 (SCADA). The SCADA collects wind condition data and wind turbine status data from sensors 14 installed on the wind turbines 10 of the wind park 100. The wind condition data and wind turbine status data are sent from the SCADA 13 via a message broker 15 to a computing unit 16, which uses the wind condition data and the wind turbine status data as input in a data vector for the present method to determine operational parameters for the wind turbines 10. The determined operational parameters are transmitted via a controller connector 17 and a controller 18 to the wind turbines 10 in the wind park 100.

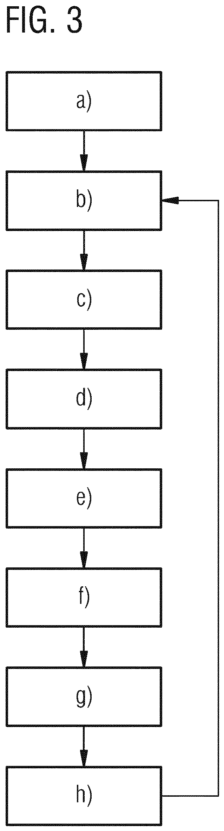

Fig. 3 shows a flow chart of the present method for dynamic real-time optimization of the performance, in particular of the power output, of a wind park 100. In step a), for a plurality of subsets 12a to 12e of the wind turbines 10, 10a to 10g of the wind park 100, a mapping of a data vector to a target parameter is provided, said target parameter being indicative of the performance of the subsets 12a to 12e of the wind turbines 10, 10a to 10g, said data vector comprising wind condition data and operational parameters for the wind turbines 10, 10a to 10g of the subsets 12a to 12e of wind turbines 10, 10a to 10g. In step b) a subset 12a to 12e of the plurality of subsets 12a to 12e of wind turbines 10, 10a to 10g is selected for optimization. In step c) the wind condition data is determined for the selected subset 12a to 12e of wind turbines 10, 10a to 10g. Afterwards, in step d) the operational parameters for the wind turbines 10, 10a to 10g of the selected subset 12a to 12e are determined by at least one of selecting operational parameters which maximize or minimize the value of the target parameter for the determined wind condition data, and/or selecting operational parameters for which the value of the target parameter for the determined wind condition data is unknown. The determined operational parameters are then applied to at least one of the wind turbines 10, 10a to 10g of the selected subset 12a to 12e in step e). After a first time interval, posterior wind conditions and a posterior value of the target parameter for the selected subset 12a to 12e are measured or determined in step f). In the following step g) the mapping is updated with at least one of the posterior wind conditions and/or the posterior value of the target parameter of preceding step f) for the applied determined operational parameters. Finally, in step h) after a second time interval, the method is repeated by returning to step b).

The method is explained in the following with successively more detailed examples 1 to 3.

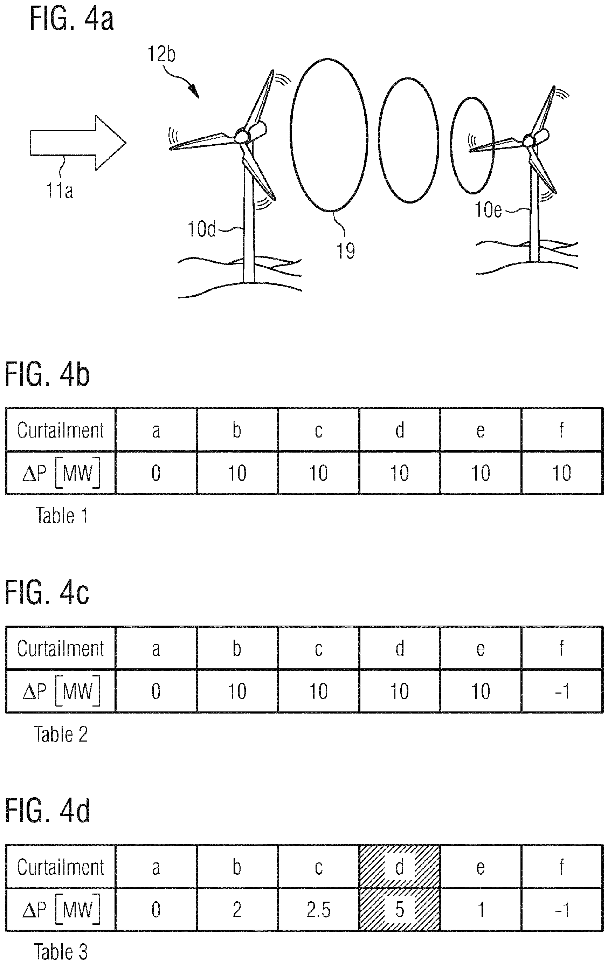

With regard to Figs. 4a to 4d a first example of the method for dynamic real-time optimization of the performance of a wind park 100 is explained. Fig. 4a shows wind turbines 10d and 10e of subset 12b of Fig. 1a. In this example it is assumed that the prevailing wind direction 11a is from the north and unchanging. In particular it is assumed that the wind speed is constantly 10 m/sec and the wind direction is constantly 270°. Wind turbine 10d is the upstream wind turbine and wind turbine 10e is the downstream wind turbine. Due to the alignment of wind turbines 10d, 10e regarding the prevailing wind direction 11a, wake effects 19 induced by upstream wind turbine 10d affect downstream wind turbine 10e. Fig. 4b shows in Table 1 a mapping of a data vector comprising wind condition data and operational parameters to a target parameter. The operational parameters represent a curtailment of the upstream wind turbine 10d, and therefore, the sets of operational parameters are called in Table 1 "curtailments" a to f. Since the wind condition data is assumed to be constant, the wind condition data is omitted in table 1. The target parameter ΔP in this example is the difference of the combined power output of both wind turbines 10d, 10e after the optimization and the combined power output of both wind turbines 10d, 10e before the optimization. Thus, in Example 1 the object of the optimization is to find the maximum for the function f(wind speed, wind direction, operational parameters or curtailments) = ΔP.

Before the first iteration of the method, the target parameter ΔP is set to a default value of 10 MW for all curtailments b to f as shown in Table 1. Since curtailment a corresponds to operational parameters of the wind turbines before the optimization starts ΔP is set to 0 for curtailment a. After the wind condition data for the subset 12b of wind turbines 10d, 10e is determined by measurement to a wind speed of 10 m/sec and a wind direction of 270° the operational parameters for the wind turbines 10d, 10e are determined from the Table 1 of Fig. 4b by selecting those operational parameters, i.e. that curtailment which maximizes the value of the target parameter ΔP. Since in this case the value of the target parameter ΔP is set to the default value of 10 MW for curtailments b to f, curtailment f is chosen randomly. The operational parameters of curtailment f are then applied to the upstream wind turbine 10d. After a first time interval, which corresponds to the propagation time of wake effects 19 from upstream wind turbine 10d to downstream wind turbine 10e, the posterior value of the target parameter ΔP is determined and it is found in this example that the operational parameters of curtailment f reduce the combined power output by 1 MW. Therefore, for the constant wind conditions of a wind speed of 10 m/sec and a wind direction of 270° the value of the target parameter ΔP is updated for the curtailment f to -1 MW as shown in Table 2 of Fig. 4c. In the next iteration of the method in this example the same subset 12b of wind turbines 10d, 10e is selected. Since the wind direction and wind speed have not changed, the updated mapping of Table 2 of Fig. 4c is used for the further optimization. In the second iteration a curtailment with operational parameters which maximize or minimize the value of the target parameter ΔP are chosen. Since the operational parameters of curtailments b to e are all set by default to 10 MW curtailment b is chosen randomly and the operational parameters of curtailment b are applied to the upstream wind turbine 10d. After the first time interval the posterior wind conditions, which are still unchanged, are measured again and the posterior value of the target parameter ΔP is determined to be 2 MW. The mapping is then updated for the operational parameters of curtailment b by setting ΔP to 2MW. These steps are repeated iteratively until for all operational parameters of curtailments b to f posterior values of the target parameter ΔP have been determined and used to update the mapping. The mapping obtained after these iterations is shown in Table 3 of Fig. 4d. Thus, if in the next iteration step the wind conditions still remain unchanged the operational parameters which maximize the value of the target parameter ΔP will be identified as the operational parameters of curtailment d, which improve the combined power output of the wind turbines 10d, 10e of subset 12b by 5 MW.

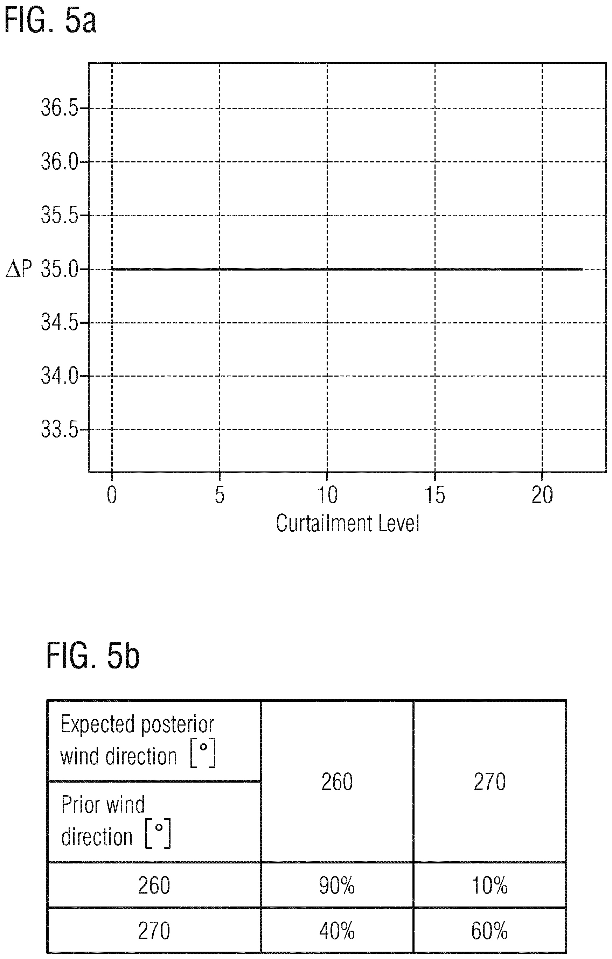

A more complex second example is described with reference to Figs. 5a to 5e. In contrast to the first example, in the second example two additional effects are accounted for. First, the wind direction 11a, 11b and wind speed are not considered to be constant and, second, the sensors 14 installed on the wind turbines 10d, 10e of subset 12b have a systematic offset error of +10° for the measured wind direction 11a, 11b. If in example 2 the mapping of example 1 as shown in Fig. 4d was used, the optimization would not be optimal. For example, if the wind came from 260°, the sensors 14, because of the offset error, would report a wind direction of 270° and accordingly the operational parameters of curtailment d would be determined and applied to the upstream wind turbine 10d. Since the actual wind direction is, however, 260° the subset 12b of wind turbines 10d, 10e would not provide the maximum combined power output. In addition, because the wind direction and wind speed can change over time during the adjustment of the wind turbines 10d, 10e choosing a curtailment according to table 3 of figure 4d may result in a non-maximal combined power output of the wind turbines 10d, 10e of subset 12b because at the time when the wind turbines 10d, 10e have been adjusted according to the operational parameters of curtailment d the wind direction and wind speed may have changed.

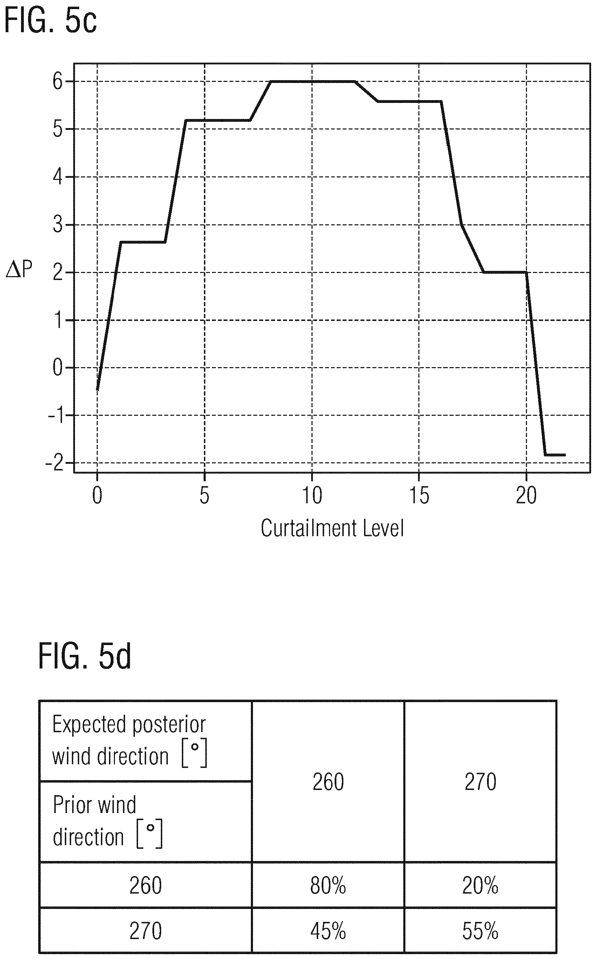

To compensate for these two effects in example 2 the method of Example 1 is modified. First, the simple mapping with discrete values of the target parameter for discrete curtailments as in Fig. 4d is replaced with a mapping implemented as an objective function with continuous values of the target parameter ΔP for continuous wind condition data and continuous operational parameters. Since the operational parameters do not correspond to discrete curtailments, instead of discrete curtailments a continuous curtailment level is used. Fig. 5a shows a default value of target parameter ΔP of 35 MW for a continuous curtailment level. Because the objective function is high dimensional, in Fig. 5a the objective function is shown for one particular set of wind condition data. In a second modification a relationship between prior wind conditions and posterior wind conditions expected after the first predetermined time interval based on historical data is provided, as shown in Fig. 5b. The relationship provides a statistical probability for the expected posterior wind conditions given prior wind conditions. For example according to Fig. 5b if the wind direction prior to the optimization is measured to be 270° the historical data shows the probability that the wind direction after the first predetermined time interval required for wake effects 19 to propagate between the first wind turbine 10d and the second wind turbine 10e remains 270° is 60%. The third modification is that for determining the operational parameters of the curtailment level, which maximize the value of the target parameter ΔP a decision tree is used. According to Example 2 after the subset 12b has been chosen for optimization the prior wind conditions, in particular the wind direction and the wind speed are measured. For example, the prior wind direction is measured to 260°. From the relationship of Fig. 5b it is inferred that after the first time interval the wind direction will remain 260° with a probability of 60% and, thus, the wind direction for the wind condition data is determined to be 260°. Then the decision tree is used to find the curtailment level from the objective function of Fig. 5b, which corresponding operational parameters maximize the value of the target parameter ΔP. Since at the first iteration the target parameter ΔP is set to a default value of 35 MW, the decision tree will chose one curtailment level randomly. The operational parameters corresponding to the selected curtailment level are applied to the wind turbines 10d, 10e. After the first time interval, for example one minute, which is required for wake effects to propagate from the upstream wind turbine 10d to the downstream wind turbine 10e the posterior wind conditions, in particular the posterior wind direction, is measured and the value of the posterior target parameter ΔP is determined. From the measured prior wind direction and the measured posterior wind direction the relationship of Fig. 5a is updated. In addition, the measured posterior wind conditions, in particular the measured posterior wind direction and wind speed, and the measured posterior value of the target parameter ΔP are used to update objective function and the decision tree. After several iterations, the probabilities of the relationship between prior wind direction and expected posterior wind directions may have changed according to Fig. 5d. In addition, the objective function may be updated as shown in Fig. 5c, where the optimal operational parameters for the particular wind conditions correspond to a curtailment level of 10. Because of the objective function, the decision tree and the relationship between prior wind direction and expected posterior wind directions are continuously updated with measured data, systematic offset such as the assumed +10° offset error for the measurement of the wind direction will automatically be compensated for.

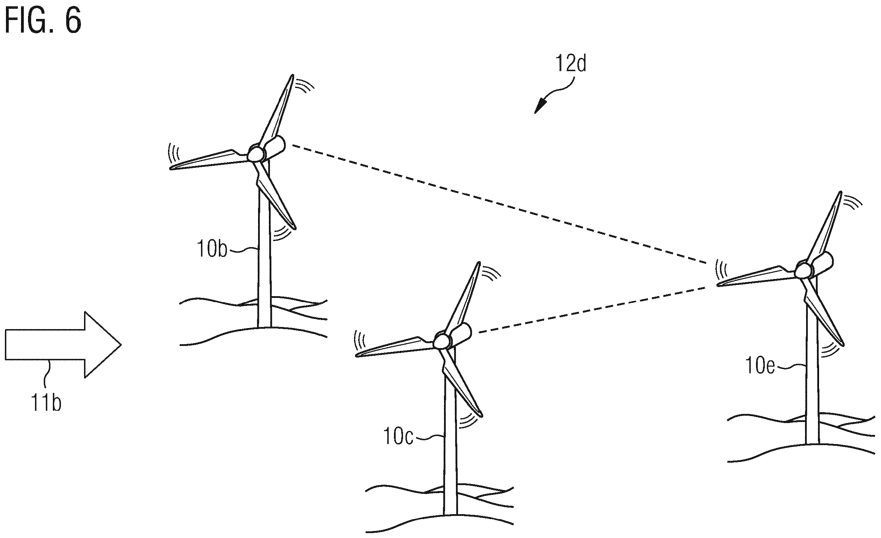

A third example is explained with regard to Fig. 6. In the third example the prevailing wind direction 11b may have changed to a west wind. Thus subset 12d as shown in Fig. 1b may be selected. In Subset 12d wind turbines 10b and 10c are upstream wind turbines to wind turbine 10e, which is a downstream wind turbine. For optimizing the performance of the wind turbines 10b, 10c, 10e in subset 12d, in order to limit the mechanical loads on the downstream wind turbine 10e its power output is limited to a maximum of 5% over its usual power output. Thus, the target parameter ΔP is maximized under the condition that the power output of the downstream wind turbine 10e is at a maximum of 5% over its usual power output. Furthermore, the data vector is more complex and includes besides the wind direction and the wind speed additional data like the temperature, the relative humidity, the Reynolds number, the turbulence intensity, the time of the day and the meteorological season.

Since the corresponding objective function to be maximized is a nonlinear function a machine learning model is used to approximate this function. The machine learning model is implemented as a neural network. After the operational parameters corresponding to the curtailment level which maximizes the target parameter have been determined and applied to the wind turbines 10b, 10c and 10e of subset 12b, the posterior wind direction, wind speed, temperature, relative humidity, Reynolds number, turbulence intensity, and time of the day are measured after the first time interval. In addition the posterior value of the target parameter is determined. Then, the relationship between prior wind conditions and expected posterior wind conditions is updated with these data. In addition, the objective function and the weights of the neural network are updated with the new data.

### List of reference numerals

- 100: Wind park
- 10: wind turbine
- 10a-10g: wind turbine
- 11a, 11b: wind direction
- 12a-12e: subset of wind turbines
- 13: Supervisory Control And Data Acquisition system
- 14: Sensor
- 15: Message broker
- 16: Computing unit
- 17: Controller connector
- 18: Controller
- 19: Wake effect

## Claims

1. A method for dynamic real-time optimization of the performance, in particular of the power output, of a wind park (100), wherein the wind park (100) comprises a plurality of wind turbines (10, 10a, 10b, 10c, 10d, 10e, 10f, 10g), the method comprising the steps of:
a) providing, for a plurality of subsets (12a, 12b, 12c, 12d, 12e) of the wind turbines (10, 10a, 10b, 10c, 10d, 10e, 10f, 10g) of the wind park (100), a mapping of a data vector to a target parameter, said target parameter being indicative of the performance of the subsets (12a, 12b, 12c, 12d, 12e) of the wind turbines (10, 10a, 10b, 10c, 10d, 10e, 10f, 10g), said data vector comprising wind condition data and operational parameters for the wind turbines (10, 10a, 10b, 10c, 10d, 10e, 10f, 10g) of the subsets (12a, 12b, 12c, 12d, 12e) of wind turbines (10, 10a, 10b, 10c, 10d, 10e, 10f, 10g),
b) selecting a subset (12a, 12b, 12c, 12d, 12e) of the plurality of subsets (12a, 12b, 12c, 12d, 12e) of wind turbines (10, 10a, 10b, 10c, 10d, 10e, 10f, 10g) for optimization,
c) determining the wind condition data for the selected subset (12a, 12b, 12c, 12d, 12e) of wind turbines (10, 10a, 10b, 10c, 10d, 10e, 10f, 10g),
d) determining the operational parameters for the wind turbines (10, 10a, 10b, 10c, 10d, 10e, 10f, 10g) of the selected subset (12a, 12b, 12c, 12d, 12e) by at least one of
- selecting operational parameters which maximize or minimize the value of the target parameter for the determined wind condition data, and/or
- selecting operational parameters for which the value of the target parameter for the determined wind condition data is unknown,
the method further comprising the steps of
e) applying the determined operational parameters to at least one of the wind turbines (10, 10a, 10b, 10c, 10d, 10e, 10f, 10g) of the selected subset (12a, 12b, 12c, 12d, 12e),
f) after a first time interval, measuring posterior wind conditions and determining a posterior value of the target parameter for the selected subset (12a, 12b, 12c, 12d, 12e),
g) updating the mapping with the posterior wind conditions and the posterior value of the target parameter of step f) for the applied determined operational parameters, and
h) repeating, after a second time interval, steps b) to h),
wherein the determined operational parameters for the wind turbines (10, 10a, 10b, 10c, 10d, 10e, 10f, 10g) of the selected subset (12a, 12b, 12c, 12d, 12e) and the values of the target parameter are determined by a data-driven method and not determined based on physical models or technical models or weather models or external forecasts or simulations.

2. The method according to claim 1, wherein the subset (12a, 12b, 12c, 12d, 12e) is selected based on wind park (100) layout, and/or measured wind condition data, and/or a lookup table, and/or a database, and/or a predetermined selection condition.

3. The method according to claim 1 or 2, wherein in step e) the determined operational parameters are applied to at least one upstream wind turbine (10, 10a, 10b, 10c, 10d, 10e, 10f, 10g) and/or to at least one downstream wind turbine (10, 10a, 10b, 10c, 10d, 10e, 10f, 10g) of the selected subset (12a, 12b, 12c, 12d, 12e) of wind turbines (10, 10a, 10b, 10c, 10d, 10e, 10f, 10g).

4. The method according to any one of the preceding claims, wherein the determined wind condition data is determined by a data-driven method, and in particular not determined based on physical models or technical models or weather models or external forecasts or simulations.

5. The method according to any one of the preceding claims, wherein the mapping is implemented as an objective function, wherein preferably the objective function is a continuous function of the data vector, wherein further preferably the values of the target parameter are interpolated between discrete data vector points.

6. The method according to any one of the preceding claims, wherein in step d) the value of the target parameter is maximized or minimized by means of a machine learning algorithm, and/or a decision tree, and/or a neural network.

7. The method according to any one of the preceding claims, wherein in step g) the mapping is updated by inputting at least one of the measured posterior wind conditions, and/or the determined operational parameters and/or the measured posterior value of the target parameter into a machine learning algorithm, and/or a decision tree and/or a neural network, in particular into the machine learning algorithm, and/or the decision tree and/or the neural network of claim 6.

8. The method according to any one of the preceding claims, further comprising the step of providing a relationship, preferably based on historical data, between prior wind conditions and posterior wind conditions, said posterior wind conditions expected after the predetermined first time interval, the relationship preferably being a statistical probability of the posterior wind conditions expected after the first predetermined time interval for the prior wind conditions, wherein furthermore preferably the wind condition data in step c) are determined by measuring prior wind conditions and selecting the expected posterior wind conditions based on the relationship.

9. The method according to claim 8, wherein after step g) the relationship is updated with the measured prior wind conditions of step c) and the measured posterior wind conditions in step f).

10. The method according to any one of the preceding claims, wherein in step a) the value of the target parameter is set to a default maximal or minimal value for data vectors for which the value of the target parameter is unknown.

11. The method according to any one of the preceding claims, wherein if in step d) multiple operational parameters maximize or minimize the value of the target parameter for the determined wind condition data, and/or if in step d) the value of the target parameter is unknown for multiple operational parameters, the operational parameters are determined by selecting operational parameters randomly from the multiple operational parameters or by interpolation the operational parameters between operational parameters with known values of the target parameter.

12. The method according to any one of the preceding claims, wherein the target parameter is a power output of at least one of the wind turbines (10, 10a, 10b, 10c, 10d, 10e, 10f, 10g) in the selected subset (12a, 12b, 12c, 12d, 12e), and/or a combined power output of the wind turbines (10, 10a, 10b, 10c, 10d, 10e, 10f, 10g) in the selected subset (12a, 12b, 12c, 12d, 12e), and/or a limit on a mechanical load of at least one of the wind turbines (10, 10a, 10b, 10c, 10d, 10e, 10f, 10g) of the selected subset (12a, 12b, 12c, 12d, 12e), and/or power grid related curtailments and/or any combination thereof, and/or wherein the data vector, in particular the wind condition data, comprises the wind speed and/or the wind direction (11a, 11b), and/or the turbulence intensity and/or the temperature and/or the relative humidity, and/or the meteorological season, and/or wherein the data vector comprises the Reynold number and/or a turbine status and/or a wind park status and/or turbine downtimes and/or power grid related curtailments and/or the time, and/or wherein the data vector, in particular the operational parameters, comprises a nacelle yaw angle and/or blade pitch angle of at least one of the wind turbines (10, 10a, 10b, 10c, 10d, 10e, 10f, 10g) in the selected subset (12a, 12b, 12c, 12d, 12e).

13. The method according to any one of the preceding claims, wherein the first time interval of step f) is equal or greater than the wake propagation time for wake effects (19) to propagate between the wind turbines (10, 10a, 10b, 10c, 10d, 10e, 10f, 10g) of the selected subset (12a, 12b, 12c, 12d, 12e), wherein preferably the wake propagation time is calculated based on an estimation for the wind park layout and/or the wind direction (11a, 11b) and/or wind speed, and/or on a sensor based measurement and/or using an algorithm using the power output of the wind turbines (10, 10a, 10b, 10c, 10d, 10e, 10f, 10g) in the selected subset (12a, 12b, 12c, 12d, 12e).

14. A Wind park (100) configured for conducting the method of claims 1 to 13, wherein the wind park comprises a plurality of wind turbines (10, 10a, 10b, 10c, 10d, 10e, 10f, 10g) and a Supervisory Control And Data Acquisition System (SCADA) (13) for a real-time measurement and/or determination of prior wind conditions and/or posterior wind conditions and/or posterior values of the target parameter and/or of operational parameters.

15. A computer program product comprising instructions which, when the program is executed by a computer operable to receive at least measured wind condition data and determined posterior values of a target parameter, cause the computer to carry out the steps of the method of claims 1 to 13, in particular at least steps d) and g) of claim 1.

## Patentansprüche

1. Verfahren zur dynamischen Echtzeitoptimierung der Leistung, insbesondere der Leistungsabgabe, eines Windparks (100), wobei der Windpark (100) eine Vielzahl von Windturbinen (10, 10a, 10b, 10c, 10d, 10e, 10f, 10g) umfasst, wobei das Verfahren die folgenden Schritte umfasst:
a) für eine Vielzahl von Teilmengen (12a, 12b, 12c, 12d, 12e) der Windturbinen (10, 10a, 10b, 10c, 10d, 10e, 10f, 10g) des Windparks (100), Bereitstellen eines Mappings eines Datenvektors auf einen Zielparameter, wobei der Zielparameter die Leistung der Teilmengen (12a, 12b, 12c, 12d, 12e) der Windturbinen (10, 10a, 10b, 10c, 10d, 10e, 10f, 10g) anzeigt, wobei der Datenvektor Windzustandsdaten und Betriebsparameter für die Windturbinen (10, 10a, 10b, 10c, 10d, 10e, 10f, 10g) der Teilmengen (12a, 12b, 12c, 12d, 12e) von Windturbinen (10, 10a, 10b, 10c, 10d, 10e, 10f, 10g) umfasst,
b) Auswählen einer Teilmenge (12a, 12b, 12c, 12d, 12e) der Vielzahl von Teilmengen (12a, 12b, 12c, 12d, 12e) von Windturbinen (10, 10a, 10b, 10c, 10d, 10e, 10f, 10g) zur Optimierung,
c) Bestimmen der Windzustandsdaten für die ausgewählte Teilmenge (12a, 12b, 12c, 12d, 12e) von Windturbinen (10, 10a, 10b, 10c, 10d, 10e, 10f, 10g),
d) Bestimmen der Betriebsparameter für die Windturbinen (10, 10a, 10b, 10c, 10d, 10e, 10f, 10g) der ausgewählten Teilmenge (12a, 12b, 12c, 12d, 12e) durch mindestens einen der folgenden Schritte
- Auswählen von Betriebsparametern, die den Wert des Zielparameters für die bestimmten Windzustandsdaten maximieren oder minimieren, und/oder
- Auswählen von Betriebsparametern, für die der Wert des Zielparameters für die bestimmten Windzustandsdaten unbekannt ist,
wobei das Verfahren ferner die folgenden Schritte umfasst:
e) Anwenden der bestimmten Betriebsparameter auf mindestens eine der Windturbinen (10, 10a, 10b, 10c, 10d, 10e, 10f, 10g) der ausgewählten Teilmenge (12a, 12b, 12c, 12d, 12e),
f) nach einem ersten Zeitintervall, Messen der späteren Windbedingungen und Bestimmen eines späteren Wertes des Zielparameters für die ausgewählte Teilmenge (12a, 12b, 12c, 12d, 12e),
g) Aktualisieren des Mappings mit den späteren Windbedingungen und dem späteren Wert des Zielparameters von Schritt f) für die angewandten bestimmten Betriebsparameter, und
h) Wiederholen der Schritte b) bis h) nach einem zweiten Zeitintervall,
wobei die bestimmten Betriebsparameter für die Windturbinen (10, 10a, 10b, 10c, 10d, 10e, 10f, 10g) der ausgewählten Teilmenge (12a, 12b, 12c, 12d, 12e) und die Werte des Zielparameters durch ein datengetriebenes Verfahren bestimmt werden und nicht auf Basis von physikalischen Modellen oder technischen Modellen oder Wettermodellen oder externen Vorhersagen oder Simulationen bestimmt werden.

2. Verfahren gemäß Anspruch 1, wobei die Teilmenge (12a, 12b, 12c, 12d, 12e) basierend auf dem Layout des Windparks (100) und/oder gemessenen Windzustandsdaten und/oder einer Nachschlagetabelle und/oder einer Datenbank und/oder einer vorbestimmten Auswahlbedingung ausgewählt wird.

3. Verfahren gemäß Anspruch 1 oder 2, wobei in Schritt e) die bestimmten Betriebsparameter auf mindestens eine Upstream-Windturbine (10, 10a, 10b, 10c, 10d, 10e, 10f, 10g) und/oder auf mindestens eine Downstream-Windturbine (10, 10a, 10b, 10c, 10d, 10e, 10f, 10g) der ausgewählten Teilmenge (12a, 12b, 12c, 12d, 12e) von Windturbinen (10, 10a, 10b, 10c, 10d, 10e, 10f, 10g) angewendet werden.

4. Verfahren gemäß einem der vorhergehenden Ansprüche, wobei die bestimmten Windzustandsdaten durch ein datengetriebenes Verfahren bestimmt werden und insbesondere nicht auf Basis von physikalischen Modellen oder technischen Modellen oder Wettermodellen oder externen Vorhersagen oder Simulationen bestimmt werden.

5. Verfahren gemäß einem der vorhergehenden Ansprüche, wobei das Mapping als Zielfunktion implementiert wird, wobei bevorzugt die Zielfunktion eine kontinuierliche Funktion des Datenvektors ist, wobei weiter bevorzugt die Werte des Zielparameters zwischen diskreten Datenvektorpunkten interpoliert werden.

6. Verfahren gemäß einem der vorhergehenden Ansprüche, wobei in Schritt d) der Wert des Zielparameters mittels eines maschinellen Lernalgorithmus und/oder eines Entscheidungsbaums und/oder eines neuronalen Netzes maximiert oder minimiert wird.

7. Verfahren gemäß einem der vorhergehenden Ansprüche, wobei in Schritt g) das Mapping aktualisiert wird, indem mindestens eines der gemessenen späteren Windbedingungen und/oder der bestimmten Betriebsparameter und/oder des gemessenen späteren Wertes des Zielparameters in einen maschinellen Lernalgorithmus und/oder einen Entscheidungsbaum und/oder ein neuronales Netz, insbesondere in den maschinellen Lernalgorithmus und/oder den Entscheidungsbaum und/oder das neuronale Netz gemäß Anspruch 6 eingegeben wird.

8. Verfahren gemäß einem der vorhergehenden Ansprüche, ferner umfassend den Schritt des Bereitstellens einer Beziehung, bevorzugt basierend auf historischen Daten, zwischen früheren Windbedingungen und späteren Windbedingungen, wobei die späteren Windbedingungen nach dem vorbestimmten ersten Zeitintervall erwartet werden, wobei die Beziehung bevorzugt eine statistische Wahrscheinlichkeit der späteren Windbedingungen sind, die nach dem ersten vorbestimmten Zeitintervall für die früheren Windbedingungen erwartet werden, wobei weiterhin bevorzugt die Windzustandsdaten in Schritt c) durch Messen der früheren Windbedingungen und Auswählen der erwarteten späteren Windbedingungen basierend auf der Beziehung bestimmt werden.

9. Verfahren gemäß Anspruch 8, wobei nach Schritt g) die Beziehung mit den gemessenen früheren Windbedingungen von Schritt c) und den gemessenen späteren Windbedingungen in Schritt f) aktualisiert wird.

10. Verfahren gemäß einem der vorhergehenden Ansprüche, wobei in Schritt a) der Wert des Zielparameters auf einen voreingestellten maximalen oder minimalen Wert für Datenvektoren eingestellt wird, für die der Wert des Zielparameters unbekannt ist.

11. Verfahren gemäß einem der vorhergehenden Ansprüche, wobei, wenn in Schritt d) mehrere Betriebsparameter den Wert des Zielparameters für die bestimmten Windzustandsdaten maximieren oder minimieren, und/oder wenn in Schritt d) der Wert des Zielparameters für mehrere Betriebsparameter unbekannt ist, die Betriebsparameter durch zufälliges Auswählen von Betriebsparametern aus den mehreren Betriebsparametern oder durch Interpolieren der Betriebsparameter zwischen Betriebsparametern mit bekannten Werten des Zielparameters bestimmt werden.

12. Verfahren gemäß einem der vorhergehenden Ansprüche, wobei der Zielparameter eine Leistungsabgabe von mindestens einer der Windturbinen (10, 10a, 10b, 10c, 10d, 10e, 10f, 10g) in der ausgewählten Teilmenge (12a, 12b, 12c, 12d, 12e) und/oder eine kombinierte Leistungsabgabe der Windturbinen (10, 10a, 10b, 10c, 10d, 10e, 10f, 10g) in der ausgewählten Teilmenge (12a, 12b, 12c, 12d, 12e) und/oder eine Begrenzung einer mechanischen Belastung mindestens einer der Windturbinen (10, 10a, 10b, 10c, 10d, 10e, 10f, 10g) der ausgewählten Teilmenge (12a, 12b, 12c, 12d, 12e) und/oder stromnetzbezogene Einschränkungen und/oder eine beliebige Kombination davon ist, und/oder wobei der Datenvektor, insbesondere die Windzustandsdaten, die Windgeschwindigkeit und/oder die Windrichtung (11a, 11b) und /oder die Turbulenzintensität und/oder die Temperatur und/oder die relative Luftfeuchtigkeit und/oder die meteorologische Jahreszeit umfassen, und/oder wobei der Datenvektor die Reynold-Zahl und/oder einen Turbinenstatus und/oder einen Windparkstatus und/oder Turbinenstillstandzeiten und/oder stromnetzbezogene Einschränkungen und/oder die Zeit umfasst, und/oder wobei der Datenvektor, insbesondere die Betriebsparameter, einen Gondel-Gierwinkel und/oder Windturbinenblatt-Anstellwinkel von mindestens einer der Windturbinen (10, 10a, 10b, 10c, 10d, 10e, 10f, 10g) in der ausgewählten Untermenge (12a, 12b, 12c, 12d, 12e) umfasst.

13. Verfahren gemäß einem der vorhergehenden Ansprüche, wobei das erste Zeitintervall von Schritt f) gleich oder größer als die Nachlaufausbreitungszeit für Nachlaufeffekte (19) ist, um sich zwischen den Windturbinen (10, 10a, 10b, 10c, 10d, 10e, 10f, 10g) der ausgewählten Teilmenge (12a, 12b, 12c, 12d, 12e) auszubreiten, wobei bevorzugt die Nachlaufausbreitungszeit basierend auf einer Schätzung für das Windparklayout und/oder die Windrichtung (11a, 11b) und/oder Windgeschwindigkeit und/oder auf einer sensorbasierten Messung und/oder unter Verwendung eines Algorithmus unter Verwendung der Leistungsabgabe der Windturbinen (10, 10a, 10b, 10c, 10d, 10e, 10f, 10g) in der ausgewählten Teilmenge (12a, 12b, 12c, 12d, 12e) berechnet wird.

14. Windpark (100), konfiguriert zum Durchführen des Verfahrens der Ansprüche 1 bis 13, wobei der Windpark eine Vielzahl von Windturbinen (10, 10a, 10b, 10c, 10d, 10e, 10f, 10g) und ein Supervisory Control and Data Acquisition System (SCADA: Überwachung, Steuerung und Datenerfassung) (13) für eine Echtzeitmessung und/oder Bestimmung von früheren Windbedingungen und/oder späteren Windbedingungen und/oder späteren Werten des Zielparameters und/oder von Betriebsparametern umfasst.

15. Computerprogrammprodukt, das Anweisungen umfasst, die, wenn das Programm von einem Computer ausgeführt wird, der betreibbar ist, um zumindest gemessene Windzustandsdaten und bestimmte spätere Werte eines Zielparameters zu empfangen, den Computer veranlassen, die Schritte des Verfahrens der Ansprüche 1 bis 13 auszuführen, insbesondere mindestens die Schritte d) und g) des Anspruchs 1.

## Revendications

1. Procédé d'optimisation dynamique de la performance en temps réel, en particulier de la puissance de sortie, d'un parc éolien (100), dans lequel le parc éolien (100) comprend une pluralité d'éoliennes (10, 10a, 10b, 10c, 10d, 10e, 10f, 10g), le procédé comprenant les étapes suivantes :
a) mise à disposition, pour une pluralité de sous-ensembles (12a, 12b, 12c, 12d, 12e) des éoliennes (10, 10a, 10b, 10c, 10d, 10e, 10f, 10g) du parc éolien (100), d'une mise en correspondance d'un vecteur de données avec un paramètre cible, ledit paramètre cible indiquant la performance des sous-ensembles (12a, 12b, 12c, 12d, 12e) des éoliennes (10, 10a, 10b, 10c, 10d, 10e, 10f, 10g), ledit vecteur de données comprenant des données de condition de vent et des paramètres de fonctionnement pour les éoliennes (10, 10a, 10b, 10c, 10d, 10e, 10f, 10g) des sous-ensembles (12a, 12b, 12c, 12d, 12e) des éoliennes (10, 10a, 10b, 10c, 10d, 10e, 10f, 10g),
b) sélection d'un sous-ensemble (12a, 12b, 12c, 12d, 12e) parmi la pluralité de sous-ensembles (12a, 12b, 12c, 12d, 12e) d'éoliennes (10, 10a, 10b, 10c, 10d, 10e, 10f, 10g) en vue d'une optimisation,
c) détermination des données de condition de vent pour le sous-ensemble (12a, 12b, 12c, 12d, 12e) d'éoliennes (10, 10a, 10b, 10c, 10d, 10e, 10f, 10g) sélectionné,
d) détermination des paramètres de fonctionnement pour les éoliennes (10, 10a, 10b, 10c, 10d, 10e, 10f, 10g) du sous-ensemble (12a, 12b, 12c, 12d, 12e) sélectionné, à partir de l'une au moins parmi
- une sélection de paramètres de fonctionnement maximisant ou minimisant la valeur du paramètre cible pour les données de condition de vent déterminées, et/ou
- une sélection de paramètres de fonctionnement pour lesquels la valeur du paramètre cible pour les données de condition de vent déterminées est inconnue,
le procédé comprenant en outre les étapes suivantes
e) application des paramètres de fonctionnement déterminés à l'une au moins des éoliennes (10, 10a, 10b, 10c, 10d, 10e, 10f, 10g) du sous-ensemble (12a, 12b, 12c, 12d, 12e) sélectionné,
f) après un premier intervalle de temps, mesure de conditions de vent postérieures et détermination d'une valeur postérieure du paramètre cible pour le sous-ensemble (12a, 12b, 12c, 12d, 12e) sélectionné,
g) mise à jour de la mise en correspondance à l'aide des conditions de vent postérieures et de la valeur postérieure du paramètre cible de l'étape f) pour les paramètres de fonctionnement déterminés appliqués, et
h) répétition, après un deuxième intervalle de temps, des étapes b) à h),
dans lequel les paramètres de fonctionnement déterminés pour les éoliennes (10, 10a, 10b, 10c, 10d, 10e, 10f, 10g) du sous-ensemble (12a, 12b, 12c, 12d, 12e) sélectionné et les valeurs du paramètre cible sont déterminés par un procédé axé sur les données et ne sont pas déterminés sur la base de modèles physiques ou de modèles techniques ou de modèles climatiques ou de prévisions externes ou de simulations.

2. Procédé selon la revendication 1, dans lequel le sous-ensemble (12a, 12b, 12c, 12d, 12e) est sélectionné sur la base de l'agencement du parc éolien (100), et/ou de données de condition de vent mesurées, et/ou d'un tableau de conversion, et/ou d'une base de données, et/ou d'une condition de sélection prédéterminée.

3. Procédé selon la revendication 1 ou 2, dans lequel, dans l'étape e), les paramètres de fonctionnement prédéterminés sont appliqués à au moins une éolienne (10, 10a, 10b, 10c, 10d, 10e, 10f, 10g) en amont et/ou à au moins une éolienne (10, 10a, 10b, 10c, 10d, 10e, 10f, 10g) en aval parmi le sous-ensemble (12a, 12b, 12c, 12d, 12e) sélectionné d'éoliennes (10, 10a, 10b, 10c, 10d, 10e, 10f, 10g).

4. Procédé selon l'une quelconque des revendications précédentes, dans lequel les données de condition de vent déterminées sont déterminées à l'aide d'un procédé axé sur les données, et ne sont en particulier pas déterminées sur la base de modèles physiques ou de modèles techniques ou de modèles climatiques ou de prévisions externes ou de simulations.

5. Procédé selon l'une quelconque des revendications précédentes, dans lequel la mise en correspondance est effectuée comme une fonction d'objet, dans lequel la fonction d'objet est de préférence une fonction continue du vecteur de données, dans lequel les valeurs du paramètre cible sont en outre de préférence interpolées entre des points de vecteur de données discrets.

6. Procédé selon l'une quelconque des revendications précédentes, dans lequel, dans l'étape d), la valeur du paramètre cible est maximisée ou minimisée à l'aide d'un algorithme d'apprentissage automatique, et/ou d'un arbre de décision, et/ou d'un réseau neuronal.

7. Procédé selon l'une quelconque des revendications précédentes, dans lequel, dans l'étape g), la mise en correspondance est mise à jour par l'entrée de l'un au moins parmi les conditions de vent postérieures mesurées, et/ou les paramètres de fonctionnement déterminés et/ou la valeur postérieure mesurée du paramètre cible, dans un algorithme d'apprentissage automatique, et/ou un arbre de décision et/ou un réseau neuronal, en particulier dans l'algorithme d'apprentissage automatique, et/ou l'arbre de décision et/ou le réseau neuronal selon la revendication 6.

8. Procédé selon l'une quelconque des revendications précédentes, comprenant en outre l'étape de mise à disposition d'un rapport, de préférence basé sur des données historiques, entre des conditions de vent antérieures et des conditions de vent postérieures, lesdites conditions de vent postérieures étant attendues après le premier intervalle de temps prédéterminé, le rapport étant de préférence une probabilité statistique des conditions de vent postérieures attendues après le premier intervalle de temps prédéterminé pour les conditions de vent antérieures, dans lequel les données de condition de vent dans l'étape c) sont en outre de préférence déterminées en mesurant les conditions de vent antérieures et en sélectionnant les conditions de vent postérieures attendues sur la base du rapport.

9. Procédé selon la revendication 8, dans lequel, après l'étape g), le rapport est mis à jour avec les conditions de vent antérieures mesurées de l'étape c) et les conditions de vent postérieures mesurées dans l'étape f).

10. Procédé selon l'une quelconque des revendications précédentes, dans lequel, dans l'étape a), la valeur du paramètre cible est fixée à une valeur maximale ou minimale par défaut pour des vecteurs de données pour lesquels la valeur du paramètre cible est inconnue.

11. Procédé selon l'une quelconque des revendications précédentes, dans lequel, dans l'étape d), de multiples paramètres de fonctionnement maximisent ou minimisent la valeur du paramètre cible pour les données de condition de vent déterminées, et/ou si dans l'étape d), la valeur du paramètre cible est inconnue pour de multiples paramètres de fonctionnement, les paramètres de fonctionnement seront déterminés en sélectionnant des paramètres de fonctionnement de manière aléatoire à partir des multiples paramètres de fonctionnement ou par interpolation des paramètres de fonctionnement entre des paramètres de fonctionnement avec des valeurs connues du paramètre cible.

12. Procédé selon l'une quelconque des revendications précédentes, dans lequel le paramètre cible est une puissance de sortie de l'une au moins des éoliennes (10, 10a, 10b, 10c, 10d, 10e, 10f, 10g) dans le sous-ensemble (12a, 12b, 12c, 12d, 12e) sélectionné, et/ou une puissance de sortie combinée des éoliennes (10, 10a, 10b, 10c, 10d, 10e, 10f, 10g) dans le sous-ensemble (12a, 12b, 12c, 12d, 12e) sélectionné, et/ou une limite sur une charge mécanique de l'une au moins des éoliennes (10, 10a, 10b, 10c, 10d, 10e, 10f, 10g) du sous-ensemble (12a, 12b, 12c, 12d, 12e) sélectionné, et/ou des restrictions liées au réseau électrique et/ou une combinaison de celles-ci, et/ou dans lequel le vecteur de données, en particulier les données de condition de vent, comprend la vitesse du vent et/ou la direction du vent (11a, 11b), et/ou l'intensité des turbulences et/ou la température et/ou l'humidité relative, et/ou la saison météorologique, et/ou dans lequel le vecteur de données comprend le nombre de Reynold et/ou un état d'éolienne et/ou un état du parc éolien et/ou des pannes d'éolienne et/ou des restrictions liées au réseau électrique et/ou le temps, et/ou dans lequel le vecteur de données, en particulier les paramètres de fonctionnement, comprend un angle d'embardée de nacelle et/ou un angle de pas de pale de l'une au moins des éoliennes (10, 10a, 10b, 10c, 10d, 10e, 10f, 10g) dans le sous-ensemble (12a, 12b, 12c, 12d, 12e) sélectionné.

13. Procédé selon l'une quelconque des revendications précédentes, dans lequel le premier intervalle de temps de l'étape f) est égal ou supérieur au temps de propagation de sillage pour des effets de sillage (19) à propager entre les éoliennes (10, 10a, 10b, 10c, 10d, 10e, 10f, 10g) du sous-ensemble (12a, 12b, 12c, 12d, 12e) sélectionné, dans lequel le temps de propagation de sillage est de préférence calculé sur la base d'une estimation pour l'agencement du parc éolien et/ou de la direction du vent (11a, 11b) et/ou de la vitesse du vent, et/ou d'une mesure de capteur et/ou à l'aide d'un algorithme utilisant la puissance de sortie des éoliennes (10, 10a, 10b, 10c, 10d, 10e, 10f, 10g) dans le sous-ensemble (12a, 12b, 12c, 12d, 12e) sélectionné.

14. Parc éolien (100) configuré pour la mise en œuvre du procédé selon les revendications 1 à 13, dans lequel le parc éolien comprend une pluralité d'éoliennes (10, 10a, 10b, 10c, 10d, 10e, 10f, 10g) et un Système d'acquisition de données et de commande de surveillance (SCADA) (13) pour des mesures en temps réel et/ou la détermination de conditions de vent postérieures et/ou de conditions de vent antérieures et/ou de valeurs postérieures du paramètre cible et/ou de paramètres de fonctionnement.

15. Produit de programme informatique comprenant des instructions amenant l'ordinateur à mettre en œuvre les étapes du procédé selon les revendications 1 à 13, en particulier au moins les étapes d) et g) selon la revendication 1, lorsque le programme est exécuté par un ordinateur conçu pour recevoir au moins des données de condition de vent mesurées et des valeurs postérieures déterminées d'un paramètre cible.
